# EUROPEAN PATENT SPECIFICATION

(11) **EP 2 897 325 B1**
(45) Date of publication and mention of the grant of the patent: **24.05.2017**
(21) Application number: 12891025.4
(22) Date of filing: 28.12.2012
(51) Int. Cl.: H04L 12/46, H04L 12/931, H04L 12/933, H04L 12/24

(54) **COMMUNICATION SYSTEM**
KOMMUNIKATIONSSYSTEM
SYSTÈME DE COMMUNICATION

(43) Date of publication of application: 22.07.2015
(73) Proprietor: Huawei Technologies Co., Ltd., Longgang District Shenzhen, Guangdong 518129 (CN)
(72) Inventor: LIN, Liankui, Shenzhen Guangdong 518129 (CN)
(74) Representative: Goddar, Heinz J.
(86) International application number: PCT/CN2012/087899
(87) International publication number: WO 2014/101136

(56) References cited:
- WO-A1-2010/086808
- CN-A- 101 447 941
- CN-A- 101 895 423
- US-A1- 2005 226 148
- US-A1- 2011 243 031

## Description

### TECHNICAL FIELD

Embodiments of the present invention relate to communications technologies, and in particular, to a communications system.

### BACKGROUND

Wide coverage of the Internet leads to a continuous growth in users of network services. Moreover, with wide application of multimedia services on a network, network bandwidth required by the users is also continuously increasing. As a result, user capacity and bandwidth capacity of a switching device that is in a communications system and provides network services for the users also need to continuously increase.

When network services cannot be provided for users of a same access point by using one switching device due to technical restrictions, capacity of the communications system can be expanded only by adding devices, that is, network services are provided for the users of the same access point by using a plurality of switching devices. In the prior art, a method of device cascading is usually adopted for capacity expansion in order not to increase uplink ports of an access point. The device cascading may be implemented by using a line card slot, or by using an extension port of a fabric card. However, the cascading by using the line card slot needs to occupy a line card slot of the switching device, which reduces user capacity that can be provided by the switching device. Therefore, in the prior art, device cascading is generally implemented by using the extension port of the fabric card to ensure a user capacity provided by a system.

However, a large number of optical cables or high-speed cables need to be used between switching devices to perform cascading by using the extension port of the fabric card, and costs of the large number of optical cables or high-speed cables are very high, which leads to an increase in costs of device cascading.

In this regard, US 2011/243031 A1 discloses a system which includes a chassis having a group of horizontal slots in which a first group of line cards is disposed and a group of vertical slots in which a second group of line cards is disposed. Each port of a line card from the first group of line cards is operatively coupled to a different line card from the second group of line cards when the system is in a first configuration. A first set of ports and a second set of ports of a line card from the first group of line cards are operatively coupled to a first line card and a second line card from the second group of line cards, respectively, when the system is in a second configuration.

Moreover, US 2005/226148 A1 discloses a network element which includes a plurality of Input/Output Cards (IOCs), a plurality of Datapath Service Cards (DSCs); and at least one crosspoint switch card (XPC) configured to be able to selectively interconnect each of the IOCs with each of the DSCs. Enabling full interconnectivity between all the IOCs and DSCs enables greater sparing options within the network element. Additionally, the network element is configured to enable the XPCs to be spared, thus eliminating the XPCs as a potential single source of failure in the network element.

### SUMMARY

Embodiments of the present invention as defined in independent claim 1 provide a communications system, which is configured to reduce costs while improving capacity of a switching device.

An embodiment of the present invention provides a communications system, and the system includes a first switching device and at least one second switching device, where
the first switching device and the at least one second switching device are cascaded by using a shared board;
a switch fabric card of the first switching device is connected to a switch fabric card of the at least one second switching device by using wire routing of a high-speed printed circuit board on the shared board; and
the first switching device is connected to an uplink port, and the at least one second switching device is connected to the uplink port by using the wire routing of the high-speed printed circuit board.

The shared board is an integrated fabric card of the switch fabric card of the first switching device and the switch fabric card of the at least one second switching device; and
the switch fabric card of the first switching device is connected to the switch fabric card of the at least one second switching device by using the wire routing of the high-speed printed circuit board on the integrated fabric card.

The shared board is a backplane configured to install the first switching device and the at least one second switching device, where
the switch fabric card of the first switching device and the switch fabric card of the at least one second switching device are separately installed on the backplane; and
the switch fabric card of the first switching device is connected to the switch fabric card of the at least one second switching device by using the wire routing of the high-speed printed circuit board on the backplane.

The communications system further includes: an integrated management and control unit which is connected to the first switching device and the at least one second switching device, where
the integrated management and control unit is configured to perform unified management and control on the first switching device and the at least one second switching device.

The first switching device and the at least one second switching device share a functional unit, where
the functional unit includes at least one unit of a power supply unit and a monitoring unit.

In the communications system provided in the embodiments of the present invention, capacity expansion of a switching device is implemented by disposing a first switching device and a second switching device, and by connecting switch fabric units switch fabric card of the first switching device switch fabric card and the second switching device using wire routing of a high-speed printed circuit board, which greatly saves costs for cascading switching devices, without adding an uplink port to the switching device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of current cascading of switching devices by using switch fabric units;
FIG. 2 is a schematic structural diagram of Embodiment 1 of a communications system provided by the embodiments of the present invention;
FIG. 3 is a schematic structural diagram where a first switch fabric unit, a second switch fabric unit, and a shared board are connected by using a connector, welding, or the like in the embodiment shown in FIG. 2;
FIG. 4 is a schematic structural diagram of the embodiment shown in FIG. 2 when a shared board is an integrated fabric card;
FIG. 5 is a schematic structural diagram of Embodiment 2 of the communications system provided by the embodiments of the present invention; and
FIG. 6 is a schematic structural diagram of Embodiment 3 of the communications system provided by the embodiments of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

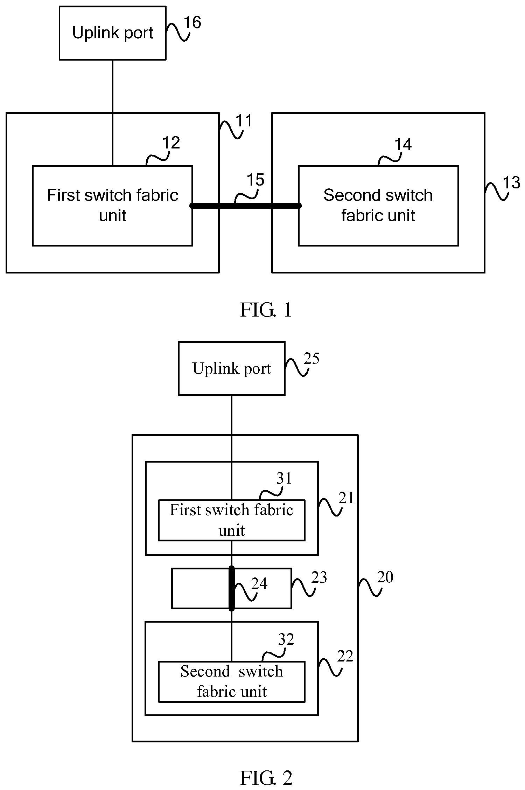

FIG. 1 is a schematic structural diagram of current cascading of switching devices by using switch fabric units. As shown in FIG. 1, cascading of two switching devices is used as an example for description.

A first switching device 11 includes a first switch fabric card 12, and a second switching device 13 includes a second switch fabric card 14, where the first switching device 11 and the second switching device 13 are cascaded by using an optical cable or a high-speed cable 15 between the first switch fabric card 12 and the second switch fabric card 14. The first switching device 11 is connected to an uplink port 16, and a user equipment connected to the first switching device 11 exchanges data with another switching device on a network by using the uplink port 16. The second switching device 13 is connected to the uplink port 16 by using the optical cable or the high-speed cable 15, and a user equipment connected to the second switching device 13 exchanges data with another switching device on the network by using the uplink port 16.

In the cascading manner of switching devices shown in FIG. 1, two switching devices may exchange data with another switching device on the network by using only one uplink port. Compared with a solution in which two switching devices are separately connected to an uplink port, the cascading manner in this solution can save a resource of one uplink port. However, costs of the optical cable or the high-speed cable for connecting the two switching devices are relatively high, and more optical cables or high-speed cables are needed if both switching devices to be cascaded have relatively large capacity. As a result, costs derived from cascading are extremely high, which may be likely to exceed costs of the switching devices themselves. In addition, a control and management unit needs to be separately disposed in the two switching devices to be cascaded, and a user can only control and manage each switching device by using a control and management unit of the switching device, which also increases human resources required for controlling and managing the switching devices.

FIG. 2 is a schematic structural diagram of Embodiment 1 of a communications system provided by the embodiments of the present invention. As shown in FIG. 2, the communications system 20 in this embodiment includes a first switching device 21 and a second switching device 22.

The first switching device 21 and the second switching device 22 are cascaded by using a shared board 23; a first switch fabric card 31 of the first switching device 21 is connected to a second switch fabric card 32 of the second switching device 22 by using wire routing 24 of a high-speed printed circuit board on the shared board 23; and the first switching device 21 is connected to an uplink port 25, and the second switching device 22 is connected to the uplink port 25 by using the wiring routing 24 of the high-speed printed circuit board on the shared board 23.

Specifically, in order to resolve a problem that costs are too high when switching devices are cascaded by using an optical cable or a high-speed cable, this embodiment provides a design method for a communications system, where two switching devices in the prior art are used as sub-device units, and the wire routing of the high-speed printed circuit board is used to replace the optical cable or the high-speed cable for cascading the two devices. Because the costs of the wire routing of the high-speed printed circuit board on a printed circuit board are extremely low, and a data transmission rate of an optical cable or a high-speed cable may be achieved, costs to cascade switching device may be greatly reduced by replacing the optical cable or the high-speed cable with the wire routing of the high-speed printed circuit board. The communications system provided in this embodiment may be actually a standalone switching device, where the first switching device and the second switching device that are being cascaded in the communications system may be regarded as logical device units in the communications system, where each logical device unit may complete all the same services as the switching device in the prior art does, and possess the user capacity and bandwidth capacity as the switching device in the prior art does.

The wire routing of the high-speed printed circuit board is wire routing for high-speed data transmission on a printed circuit board. To implement the wire routing of the high-speed printed circuit board, it is necessary to perform such design as impedance control, reflection control, and shield control on the wire routing on a common printed circuit board, so as to control insertion loss and crosstalk of the wire routing on the printed circuit board, thereby enabling high-speed transmission of a signal through the wire routing on the printed circuit board, and forming the wire routing of a high-speed printed circuit board.

The communications system 20 provided in this embodiment includes the first switching device 21 and the second switching device 22, where the first switching device 21 and the second switching device 22 are logical device units of the communications system 20, and the first switching device 21 and the second switching device 22 may separately and independently complete all the services as the switching device in the prior art does. The first switching device 21 includes the first switch fabric card 31, and the second switching device 22 includes the second switch fabric card 32. The communications system 20 further includes the shared board 23. The first switch fabric card 31 is connected to the second switch fabric card 32 by using the wire routing 24 of the high-speed printed circuit board on the shared board 23. After the connection is complete, it is equivalent that the first switching device 21 and the second switching device 22 are cascaded by using the wire routing 24 of the high-speed printed circuit board on the shared board 23. The first switching device 21 is connected to the uplink port 25, and the second switching device 22 may also be connected to the uplink port 25 by using the wire routing 24 of the high-speed printed circuit board, so that both the first switching device 21 and the second switching device 22 may exchange data with another switching device on a network by using the uplink port 25.

At present, a mutual connection between boards of switching devices is only used to support data exchange between the boards, and is not used to cascade the boards, and data exchange between the boards generally does not impose a high requirement on transmission bandwidth and a delay. However, in the communications system provided in this embodiment, the first switching device and the second switching device need to be cascaded to implement capacity expansion. In addition, after cascading is performed, the amount exchanged data is extremely large and a requirement on the transmission speed is also extremely high. Using a common printed circuit board to cascade the first switching device and the second switching device cannot meet the data transmission bandwidth and the transmission speed that are required for cascading the switching devices. Therefore, in this embodiment, a shared board is disposed, and wire routing of a high-speed printed circuit board is disposed on the shared board, so as to implement the cascading of the first switching device and the second switching device; the large amount of exchanged data may be transmitted by using the wire routing of the high-speed printed circuit board, thereby meeting the requirements of the data transmission bandwidth and the transmission speed that are necessary for cascading the switching devices.

The communications system 20 in this embodiment may provide a user capacity and a bandwidth capacity that are respectively sums of those provided by the first switching device 21 and the second switching device 22, and occupies only one uplink port 25, which achieves a same effect as cascading two switching devices by using switch fabric units. However, the optical cable or the high-speed cable used for cascading is replaced by the wire routing of the high-speed printed circuit board, which greatly reduces costs.

It should be noted that, in the communications system provided in this embodiment, the number of second switching devices is not limited to one, that is, the communications system may include more than two switching devices, where multiple switching devices are connected by using the wire routing of the high-speed printed circuit board on the shared board, which can implement capacity expansion of switching devices on a larger scale and is equivalent to cascading of the multiple switching devices together.

In the communications system provided in this embodiment, capacity expansion of a switching device is implemented by disposing a first switching device and a second switching device, and by connecting switch fabric units of the first switching device and switch fabric card switch fabric card the second switching device using wire routing of a high-speed printed circuit board, which greatly saves costs for cascading switching devices, without adding an uplink port to the switching device.

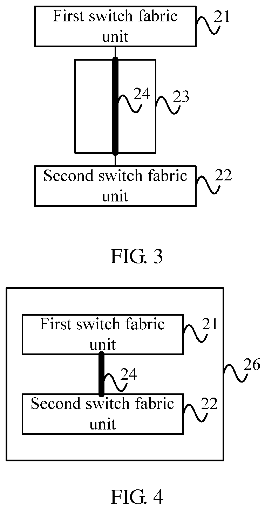

It should be noted that, the shared board 23 may be a standalone connecting board, the first switch fabric card 21 and the second switch fabric card 22 may be connected to the shared board 23 by using a connector, welding, or the like, and switch fabric card switch fabric card are connected by using the wire routing 24 of the high-speed printed circuit board on the shared board 23; the shared board 23 may also be an integrated fabric card 26, both the first switch fabric card 21 and the second switch fabric card 22 are disposed on the shared board 23, that is, the integrated fabric card 26 that is formed by combining the first switch fabric card 21 with the second switch fabric card 22 is regarded as the shared board 23, and the first switch fabric card 21 and the second switch fabric card 22 are connected by using the wire routing 24 of the high-speed printed circuit board on the integrated fabric card 26. The shared board 23 may be a single-layer or multi-layer printed circuit board, and the shared board 23 is disposed according to layout of a high-speed printed circuit board that is required. FIG. 3 is a schematic structural diagram where a first switch fabric unit, a second switch fabric unit, and a shared board are connected by using a connector, welding, or the like in the embodiment shown in FIG. 2. FIG. 4 is a schematic structural diagram of the embodiment shown in FIG. 2 when a shared board is an integrated fabric card. Further, if the first switch fabric card is connected to the second switch fabric card by using an integrated fabric card, the first switch fabric card and the second switch fabric card may share part of components, such as a power supply module, a processor, and a memory, provided that the formed integrated fabric card is capable of implementing all functions of the first switch fabric card and the second switch fabric card before they are connected, as well as implementing cascading of the first switching device and the second switching device.

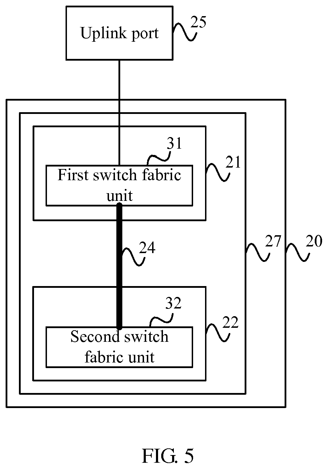

FIG. 5 is a schematic structural diagram of Embodiment 2 of the communications system provided by the embodiments of the present invention. As shown in FIG. 5, in the communications system 20 in this embodiment, a backplane 27 is used as the shared board 23 based on the communications system shown in FIG. 2.

A switch fabric card 31 of the first switching device 21 and a switch fabric card 32 of the second switching device 22 are separately installed on the backplane 27; the switch fabric card 31 of the first switching device 21 is connected to the switch fabric card 32 of the second switching device 22 by using the wire routing 24 of a high-speed printed circuit board on the backplane 27, which is equivalent to cascading of the first switching device 21 and the second switching device 22.

Further, other functional units of the first switching device 21 and the second switching device 22 may also be connected to the backplane 27 and implement interconnection by using the wire routing of the printed circuit board on the backplane 27, which is equivalent that two original backplanes of the first switching device 21 and the second switching device 22 are combined into one backplane 27.

It should be noted that, in the communications system provided in this embodiment, the number of second switching devices is not limited to one, that is, the communications system may include more than two switching devices, where multiple switching devices are connected by using the wire routing of the high-speed printed circuit board on the backplane, which can implement capacity expansion of switching devices on a larger scale and is equivalent to cascading of the multiple switching devices together.

In the communications system provided in this embodiment, capacity expansion of a switching device is implemented by disposing a first switching device and a second switching device, and by connecting switch fabric units of the first switching device and switch fabric card switch fabric card the second switching device using wire routing of a high-speed printed circuit board, which greatly saves costs for cascading switching devices, without adding an uplink port to the switching device.

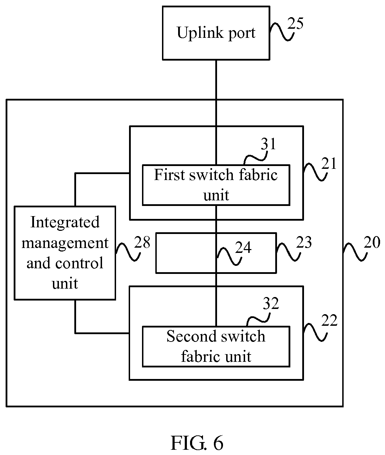

FIG. 6 is a schematic structural diagram of Embodiment 3 of the communications system provided by the embodiments of the present invention. As shown in FIG. 6, the communications system 20 in this embodiment further includes an integrated management and control unit 28 on the basis of the communications system shown in FIG. 2.

The integrated management and control unit 28 is separately connected to the first switching device 21 and the second switching device 22, and is configured to perform unified management and control on the first switching device 21 and the second switching device 22.

Specifically, every switching device in the prior art includes a management and control unit, which is configured to provide an interface to manage and control a switching device. A user may adjust and monitor various parameters of the switching device by using the management and control unit. In this embodiment, based on the communications system 20 shown in FIG. 2, the integrated management and control unit 28 is disposed, which is separately connected to the first switching device 21 and the second switching device 22, and is configured to replace original management and control units of the first switching device 21 and the second switching device 22 and provide a unified management and control platform; a user may perform unified adjustment and monitoring on various parameters of the first switching device 21 and the second switching device 22 by using the integrated management and control unit 28.

It should be noted that, in the communications system provided in this embodiment, the number of second switching devices is not limited to one, that is, the communications system may include more than two switching devices, where multiple switching devices are connected by using the wire routing of the high-speed printed circuit board on the backplane, which can implement capacity expansion of switching devices on a larger scale and is equivalent to cascading of the multiple switching devices together. The integrated management and control unit is connected to multiple switching devices and may perform unified management and control on all the switching devices

In the communications system provided in this embodiment, capacity expansion of a switching device is implemented by disposing a first switching device and a second switching device, and by connecting switch fabric units of the first switching device and switch fabric card switch fabric card the second switching device using wire routing of a high-speed printed circuit board, which greatly saves costs for cascading switching devices, without adding an uplink port to the switching device. In addition, by disposing an integrated management and control unit to perform unified management and control on the first switching device and the second switching device, human resources for managing the switching devices are saved.

Further, the communications system provided in the foregoing embodiments of the present invention may further include a shared functional unit, such as a shared power supply unit, and a shared monitoring unit. As long as the shared functional unit can implement functions of corresponding units in all switching devices in the communications system, the corresponding units in all the switching devices may be replaced by a unified shared functional unit, which can reduce the number of corresponding units in the communications system and save system resources. For example, power supply units supply power to other units in the switching devices. If a shared power supply unit is disposed and connected to all switching devices and supplies power to all the other units in the switching devices, as long as efficiency of the disposed shared power supply unit can meet power supply requirements of the switching devices, the shared power supply unit may be disposed in the communications system to replace the power supply units of the switching devices.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments.

## Claims

1. A communications system (20), comprising: a first switching device and at least one second switching device, wherein
the first switching device and the at least one second switching device are cascaded by using a shared board (23);
a switch fabric card of the first switching device is connected to a switch fabric card of
the at least one second switching device by using wire routing of a high-speed printed circuit board on the shared board (23); and
the first switching device is connected to an uplink port (25), and the at least one second switching device is connected to the uplink port (25) by using the wire routing of
the high-speed printed circuit board;
**characterized in that**
a user capacity and a bandwidth capacity of the communication system (20) are respectively sums of those provided by the first switching device and the second switching device.

2. The communications system (20) according to claim 1, wherein the shared board (23) is an integrated fabric card of the switch fabric card of the first switching device and
the switch fabric card of the at least one second switching device; and
the switch fabric card of the first switching device is connected to the switch fabric card of the at least one second switching device by using the wire routing of the high-speed printed circuit board on the integrated fabric card.

3. The communications system (20) according to claim 1, wherein the shared board (239 is a backplane configured to install the first switching device and the at least one second switching device, wherein
the switch fabric card of the first switching device and the switch fabric card of the at least one second switching device are separately installed on the backplane; and
the switch fabric card of the first switching device is connected to the switch fabric card of the at least one second switching device by using the wire routing of the high-speed printed circuit board on the backplane.

4. The communications system (20) according to any one of claims 1 to 3, further comprising: an integrated management and control unit (28) connected to the first switching device and the at least one second switching device, wherein
the integrated management and control unit (28) is configured to perform unified management and control on the first switching device and the at least one second switching device.

5. The communications system (20) according to any one of claims 1 to 3, wherein the first switching device and the at least one second switching device share a functional unit.

6. The communications system (20) according to claim 5, wherein the functional unit comprises at least one unit of a power supply unit and a monitoring unit.

## Patentansprüche

1. Kommunikationssystem (20), umfassend: eine erste Schaltvorrichtung und wenigstens eine zweite Schaltvorrichtung, wobei
die erste Schaltvorrichtung und die wenigstens eine zweite Schaltvorrichtung durch Verwendung einer gemeinsamen Platine (23) in Reihe geschaltet sind;
eine Koppelnetzkarte der ersten Schaltvorrichtung mit einer Koppelnetzkarte der wenigstens einen zweiten Schaltvorrichtung durch Verwendung von Drahtleitung einer Hochgeschwindigkeits-Leiterplatte auf der gemeinsamen Platine (23) verbunden ist; und
die erste Schaltvorrichtung mit einem Aufwartsanschluss (25) verbunden ist und die wenigstens eine zweite Schaltvorrichtung mit dem Aufwärtsanschluss (25) durch Verwendung der Drahtleitung der Hochgeschwindigkeits-Leiterplatte verbunden ist; **dadurch gekennzeichnet, dass**
eine Benutzerkapazität und eine Bandbreitenkapazität des Kommunikationssystems (20) jeweils Summen der durch die erste Schaltvorrichtung und die zweite Schaltvorrichtung bereitgestellten sind.

2. Kommunikationssystem (20) nach Anspruch 1, wobei die gemeinsame Platine (23) eine integrierte Netzkarte der Koppelnetzkarte der ersten Schaltvorrichtung und der Koppelnetzkarte der wenigstens einen zweiten Schaltvorrichtung ist; und
die Koppelnetzkarte der ersten Schaltvorrichtung mit der Koppelnetzkarte der wenigstens einen zweiten Schaltvorrichtung durch Verwendung der Drahtleitung der Hochgeschwindigkeits-Leiterplatte auf der integrierten Netzkarte verbunden ist.

3. Kommunikationssystem (20) nach Anspruch 1, wobei die gemeinsame Platine (239) eine Rückwand eingerichtet zum Installieren der ersten Schaltvorrichtung und der wenigstens einen zweiten Schaltvorrichtung ist, wobei
Die Koppelnetzkarte der ersten Schaltvorrichtung und die Koppelnetzkarte der wenigstens einen zweiten Schaltvorrichtung getrennt auf der Rückwand installiert sind; und
die Koppelnetzkarte der ersten Schaltvorrichtung mit der Koppelnetzkarte der wenigstens einen zweiten Schaltvorrichtung durch Verwendung der Drahtleitung der Hochgeschwindigkeits-Leiterplatte auf der Rückwand verbunden ist.

4. Kommunikationssystem (20) nach einem beliebigen der Ansprüche 1 bis 3, weiterhin umfassen: eine integrierte, mit der ersten Schaltvorrichtung und der wenigstens einen zweiten Schaltvorrichtung verbundene Verwaltungs- und Steuereinheit (28), wobei
die integrierte Verwaltungs- und Steuereinheit (28) zum Durchführen von vereinigter Verwaltung und Steuerung an der ersten Schaltvorrichtung und der wenigstens einen zweiten Schaltvorrichtung eingerichtet ist.

5. Kommunikationssystem (20) nach einem beliebigen der Ansprüche 1 bis 3, wobei
die erste Schaltvorrichtung und die wenigstens eine zweite Schaltvorrichtung sich eine Funktionseinheit teilen.

6. Kommunikationssystem (20) nach Anspruch 5, wobei die Funktionseinheit wenigstens eine Einheit einer Stromversorgungseinheit und einer Überwachungseinheit umfasst.

## Revendications

1. Système de communication (20), comprenant : un premier dispositif de commutation et au moins un second dispositif de commutation,
le premier dispositif de commutation et l'au moins un second dispositif de commutation étant mis en cascade au moyen d'une carte partagée (23) ;
une carte de matrice de commutation du premier dispositif de commutation étant connectée à une carte de matrice de commutation de l'au moins un second dispositif de commutation au moyen d'un chemin d'interconnexions d'une carte de circuit imprimé à grande vitesse sur la carte partagée (23) ; et
le premier dispositif de commutation étant connecté à un port de liaison montante (25), et l'au moins un second dispositif de commutation étant connecté au port de liaison montante (25) au moyen du chemin d'interconnexions de la carte de circuit imprimé à grande vitesse ;
**caractérisé en ce que** :
une capacité d'utilisateur et une capacité de bande passante du système de communication (20) étant respectivement des sommes de celles fournies par le premier dispositif de commutation et le second dispositif de commutation.

2. Système de communication (20) selon la revendication 1, dans lequel la carte partagée (23) est une carte de matrice intégrée de la carte de matrice de commutation du premier dispositif de commutation et de la carte de matrice de commutation de l'au moins un second dispositif de commutation ; et
dans lequel la carte de matrice de commutation du premier dispositif de commutation est connectée à la carte de matrice de commutation de l'au moins un second dispositif de commutation au moyen du chemin d'interconnexions de la carte de circuit imprimé à grande vitesse sur la carte de matrice intégrée.

3. Système de communication (20) selon la revendication 1, dans lequel la carte partagée (239) est un fond de panier conçu pour installer le premier dispositif de commutation et l'au moins un second dispositif de commutation,
la carte de matrice de commutation du premier dispositif de commutation et la carte de matrice de commutation de l'au moins un second dispositif de commutation étant installées séparément sur le fond de panier ; et
la carte de matrice de commutation du premier dispositif de commutation étant connectée à la carte de matrice de commutation de l'au moins un second dispositif de commutation au moyen du chemin d'interconnexions de la carte de circuit imprimé à grande vitesse sur le fond de panier.

4. Système de communication (20) selon l'une quelconque des revendications 1 à 3, comprenant en outre : une unité de gestion et de contrôle intégrée (28) connectée au premier dispositif de commutation et à l'au moins un second dispositif de commutation,
l'unité de gestion et de contrôle intégrée (28) étant conçue pour réaliser une gestion et un contrôle unifiés sur le premier dispositif de commutation et l'au moins un second dispositif de commutation.

5. Système de communication (20) selon l'une quelconque des revendications 1 à 3,
dans lequel le premier dispositif de commutation et l'au moins un second dispositif de commutation partagent une unité fonctionnelle.

6. Système de communication (20) selon la revendication 5, dans lequel l'unité fonctionnelle comprend une unité d'alimentation et/ou une unité de surveillance.
